(19) **Europäisches Patentamt**

**European Patent Office**

**Office européen des brevets**

(11) **EP 0 860 687 A2**

(12) **EUROPÄISCHE PATENTANMELDUNG**

(43) Veröffentlichungstag:
26.08.1998 Patentblatt 1998/35

(51) Int. Cl.$^6$: **G01C 19/72**

(21) Anmeldenummer: 98101779.1

(22) Anmeldetag: 03.02.1998

(84) Benannte Vertragsstaaten:
AT BE CH DE DK ES FI FR GB GR IE IT LI LU MC NL PT SE
Benannte Erstreckungsstaaten:
AL LT LV MK RO SI

(30) Priorität: 21.02.1997 DE 19706858

(71) Anmelder:
Daimler-Benz Aerospace
Aktiengesellschaft
81663 München (DE)

(72) Erfinder:
• **Müller, Reinhard, Dr.**
**82178 Puchheim (DE)**
• **Trommer, Gert, Dr.**
**80809 München (DE)**

(74) Vertreter: **Hummel, Adam**
**c/o Daimler-Benz AG**
**Patente FTP/M**
**Postfach 80 04 65**
**81663 München (DE)**

(54) **Verfahren zur Bestimmung der Drehrate**

(57) Zur Bestimmung der Drehrate kommt ein Faserkreisel mit einem 3x3-Koppler zur Verwendung, bei dem ein erster Kanal auf der einen Seite mit einer Lichtquelle und auf der anderen Seite mit einem ersten Fotoelement optisch verbunden ist und bei dem die beiden anderen Kanäle auf der einen Seite mit einer Faserspule und auf der anderen Seite mit je zweiten bzw. dritten Fotoelement optisch verbunden ist, wobei zumindest zwischen der Lichtquelle und dem 3x3-Koppler oder an einem Ende der Faserspule ein Depolarisator angeordnet ist und/oder die Faserspule eine polarisationserhaltende Faser aufweist. Mittels einer Signalverarbeitungselektronik wird aus den Signalen der drei Fotoelemente und aus durch Eichung ermittelten temperaturabhängigen Koeffizienten ein temperaturbezogener, von der Drehrate unabhängiger Wert für die Dämpfung der Faserspule und des 3x3-Kopplers errechnet. Anschließend wird die Drehrate aus den Signalen der drei Fotoelemente, den durch Eichung ermittelten temperaturabhängigen Koeffizienten und aus dem errechneten, temperaturbezogenen Wert für die Dämpfung errechnet.

Fig.1

EP 0 860 687 A2

**Beschreibung**

Die Erfindung betrifft ein Verfahren zur Bestimmung der Drehrate mittels eines Faserkreisels zur Bestimmung der Drehrate mittels eines Faserkreisels mit einem 3x3-Koppler, bei dem ein erster Kanal auf der einen Seite mit einer Lichtquelle und auf der anderen Seite mit einem ersten Fotoelement optisch verbunden ist und bei dem die beiden anderen Kanäle auf der einen Seite mit einer Faserspule und auf der anderen Seite mit je zweiten bzw. dritten Fotoelement optisch verbunden sind, wobei zumindest zwischen der Lichtquelle und dem 3x3-Koppler oder an einem Ende der Faserspule ein Depolarisator angeordnet ist und/oder die Faserspule eine polarisationserhaltende Faser aufweist.

Aus der US 4 440 498 ist ein Faserkreisel mit 3x3-Koppler bekannt, der nahe am sog. Quadraturpunkt arbeitet, ohne daß ein Modulator verwendet werden muß. Weiterhin ist aus der US 4 479 715 ein Faserkreisel mit abgewandeltem 3x3-Koppler bekannt, welcher die Drehrate aus dem Quotienten von Differenz und Summe zweier Fotoelemente ableitet. Der Vorteil dieses Signalausverteverfahrens besteht darin, daß sich die Intensität der Lichtquelle herauskürzt und deren Fluktuationen folglich keinen Einfluß auf das Meßsignal haben. Weiterhin kürzt sich bei dieser Quotientenbildung auch eine variable Spulendämpfung heraus. Nachteilig bei dieser einfachen Quotientenauswertung ist jedoch der eingeschränkt nutzbare Bereich der Sagnac-Phase auf einen Wert innerhalb von $\pm\pi/2$ typischerweise innerhalb von $\pm\pi/3$. Weiterhin ist aus der DE 39 12 005 C2 ein Verfahren zur Signalauswertung für einen Faserkreisel bekannt, welches es erlaubt, Kontrastfluktuationen durch pseudostatistische Polarisationsschwankungen des Lichtes in der Faserspule durch Rechenverfahren zu kompensieren. Weiterhin wird in Applied Optics, Vol. 29, 1990, Seiten 5360ff die Berechnung der Drehrate für einen Faserkreisel mit 3x3-Koppler beschrieben, bei welchem das Summen- bzw. Differenzsignal der o.g. Fotoelementesignale in Relation zur Drehrate, zum Kontrast des Interferenzsignals, zu sechs verschiedenen temperaturabhängigen Koeffizienten sowie zur Dämpfung der optischen Elemente, insbesondere der Faserspule, gesetzt werden. Die temperaturabhängigen Koeffizienten werden dabei durch einen Eichvorgang des Kreisels bestimmt. Sie hängen nur von der Lichtquelle, dem Koppler, bzw. den Kopplern bei mehrachsigen Kreiseln, und den Fotoelementen ab, wobei diese Werte bei gleichen wiederkehrenden Temperaturen gut reproduzierbar sind. Der Kontrast hängt von den Eigenschaften der Spule und der Polarisation des Lichtes ab. Die Dämpfung des Lichtes in den optischen Komponenten, insbesondere in der Faser, ist temperaturabhängig und unterliegt umweltbedingter Alterung. Außerdem weist die Dämpfung im Gegensatz zu den übrigen temperaturabhängigen Koeffizienten eine vergleichsweise große Hysterese bei wechselnden Temperaturgängen auf.

Gemäß DE 39 12 005 C2 kann aus den oben erwähnten Gleichungen für das Summen- bzw. Differenzsignal der Kontrast eliminiert werden. Der Vorteil gegenüber dem eingangs beschriebenen Quotientenausverteverfahren besteht darin, daß der nutzbare Bereich der Sagnac-Phase auf $\pm\pi$, also etwa dem 3fachen Wert erweitert werden kann. Allerdings ist die ermittelte Drehrate noch von der Faserdämpfung abhängig. Deshalb wurde gemäß DE 39 19 060 C2 bereits versucht, durch einen rekursiven Algorithmus den Wert der Dämpfung zu berechnen. Dies gelingt jedoch nur, wenn die Kreiselsignale bei der Drehrate 0 und einer Drehrate ungleich 0 bekannt sind. Letzteres bedeutet jedoch eine erhebliche Betriebseinschränkung, da nach dem Einschalten des Kreiseln zumindest einmal die Drehrate 0 gegeben sein muß; außerdem beeinträchtigen relativ lange Rechenzeiten des rekursiven Algorithmus die Meßgeschwindigkeit des Kreisels.

Es ist daher Aufgabe der vorliegenden Erfindung, ein Verfahren zur Bestimmung der Drehrate eines Faserkreisels zu schaffen, mit welchem der Einfluß jeglicher Dämpfungsvariationen auf die Meßsignale zumindest reduziert werden kann. Diese Aufgabe wird durch ein Verfahren gemäß Patentanspruch 1 gelöst. Für einen mehrachsigen Faserkreisel läßt sich die Lehre gemäß Patentanspruch 1 in vorteilhafter Weise durch die Merkmale des Patentanspruchs 2 optimieren.

Die Erfindung geht dabei von der Überlegung aus, daß sich bei einer Stabilisierung des Kontrastes, z.B. durch Verwendung von polarisationserhaltenden Fasern im Sinne der DE 41 34 312 oder bei Verwendung einer nicht polarisationserhaltenden Faser mit zusätzlichem Depolarisator bzw. mehreren Depolarisatoren im Sinne von DE 41 20 675 und DE 39 42 819 die aus o.g. Applied Optics bekannten Gleichungen zur Kreiselsignalauswertung nach der Dämpfung auflösen lassen. Mit einem derart errechneten Wert für die Dämpfung kann dann, zusammen mit den übrigen Meßsignalen, die Drehrate bestimmt werden.

Die Erfindung wird im folgenden anhand der in den Figuren schematisch dargestellten Ausführungsbeispielen näher beschrieben. Es zeigen:

Fig. 1    einen einachsigen Faserkreisel mit 3x3-Koppler,

Fig. 2    ein dreiachsiges Faserkreiselpaket mit gemeinsamer Lichtquelle.

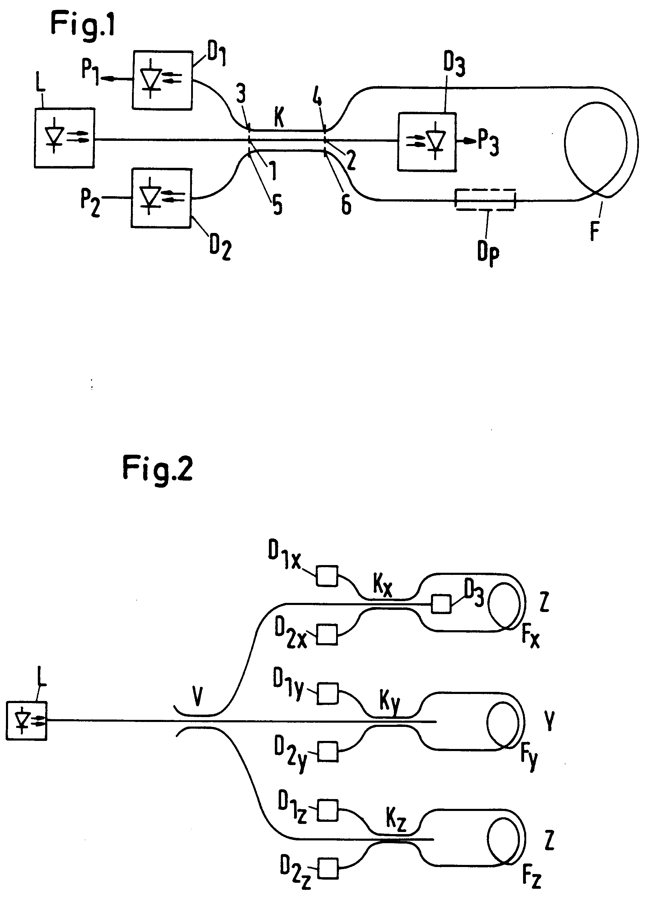

Bei dem in Figur 1 dargestellten Ausführungsbeispiel eines einachsigen Faserkreisels wird das Licht einer Leuchtdiode L, z.B. eine kantenemittierende Leuchtdiode (ELED, in den Eingang 1 eines Kanals eines 3x3-Kopplers K eingekoppelt, wobei der Ausgang 2 dieses Kanals mit einem ersten Fotoelement, der sog. Monitordiode $D_3$ optisch

verbunden ist. Die weiteren Ausgänge 4 und 6 der beiden anderen Kanäle des 3x3-Kopplers K sind mit einer Faserspule F verbunden, wobei an den Koppelstellen 3 und 5 dieser Kanäle jeweils ein zweites bzw. drittes Fotoelement D1 bzw. D2 angeschlossen ist.

Die Lichtleitfaser der Spule F kann entweder polarisationserhaltend sein oder es kommt bei Verwendung einer nicht polarisationserhaltenden Faser ein Depolarisator DP zwischen mindestens einem Spulenende und dem Koppler K zum Einsatz. Die Ausgangssignale $P_1$, $P_2$ und $P_3$ der Fotoelemente $D_1$, $D_2$ und $D_3$ sind nun durch folgende Gleichungen miteinander verbunden.

$$P_1 - P_2 = P_{Dif} = [-f_1 + k\, f_z (\sin\Phi \cos x_4 + \cos\Phi \sin x_4)]\, d\, P_3 \qquad (1)$$

$$P_1 + P_2 = P_{Sum} = [f_2 + k\, f_n (\cos\Phi \sin x_5\ \sin\Phi \cos x_5)]\, d\, P_3 \qquad (2)$$

Dabei bedeuten:

$\Phi$ = Sagnac-Phase (proportional zur zu messenden Drehrate)

k = Kontrast des Interferenzsignals

$f_1$, $f_2$, $f_z$, $f_n$, $x_4$, $x_5$ = temperaturabhängige Koeffizienten

d = Dämpfung der Faserspule einschließlich aller Spleißverbindungen.

Die Dämpfung d beinhaltet, wie erwähnt, die Dämpfung der Faserspule und die der zugehörigen Spleiße und die Dämpfung der 3x3-Koppler. Bei einem mehrachsigen Kreisel beinhaltet d sogar ein verändertes Koppelverhältnis des Verteilkopplers V, weil durch die mathematische Elimination von d auch ein verändertes Koppelverhältnis eliminiert wird.

Die o.g. Gleichungen (1) und (2) stehen zur Ermittlung der Sagnac-Phase $\Phi$ zur Verfügung. Die o.g. temperaturabhängigen Koeffizienten $f_1$ bis $x_5$ werden durch Messung bestimmt; sie hängen, wie eingangs erwähnt, von der Lichtquelle L, dem Koppler K und den Fotoelementen D1, D2 und D3 ab.

Durch die Verwendung einer polarisationserhaltenden Faser für die Faserspule F bzw. bei Einsatz eines Depolarisators DP kann der Kontrast konstant, nämlich bei 1 im erstgenannten Fall oder bei 0,5 im zweitgenannten Fall gehalten werden. Aufgrund dessen lassen sich Gleichungen (1) und (2) sowohl nach der Dämpfung d als auch nach der Sagnac-Phase $\Phi$ auflösen:

$$d = (-B \pm (B^2 - A\, C)^{1/2})/A \text{ mit}$$

$$A = (P_3\, f_1\, f_n)^2 + (P_3\, f_2\, f_x)^2 - 2\, P_3^2\, f_1\, f_2\, f_z\, f_n \sin(x_5 - x_4) - (\cos(x_5 - x_4)\, P_3\, k\, f_z\, f_n)^2$$

$$B = P_3\, P_{Dif}\, f_1\, f_n^2 - P_3\, P_{Sum}\, f_2\, f_z^2 + P_3\, (f_1\, P_{Sum} - f_2\, P_{Dif}) \sin(x_5 - x_4)\, f_z\, f_n$$

$$C = (P_{Dif}\, f_n)^2 + (P_{Sum}\, f_z)^2 + 2\, P_{Dif}\, P_{Sum}\, f_z\, f_n \sin(x_5 - x_4).$$

Die Dämpfung d ist somit unabhängig von der Drehrate $\Phi$. Die so errechnete Dämpfung d liefert dann, in die Gleichungen (1) und (2) eingesetzt, den Wert für die Drehrate $\Phi$.

Eine weitere Alternative für die Auflösung des Gleichungssystems ist die Auflösung nach dem Produkt $P_3 \cdot d$. Bei dieser Variante der Signalauswertung ist die Photodiode $D_3$ nicht notwendig.

Da die angegebenen Gleichungen sowohl für die Drehraten 0 und ungleich 0 gelten, sind für den Kreisel keine besonderen Betriebsbedingungen einzuhalten.

Da sich die Dämpfung d im allgemeinen nur langsam ändert, kann bei der Errechnung der Sagnac-Phase innerhalb eines vorbestimmten Zeitraumes ein einmal errechneter Wert für Dampfung d mehrmals verwendet werden, bis letzterer neu berechnet werden muß.

Das in Figur 2 dargestellte Ausführungsbeispiel eines dreiachsigen Faserkreiselpaketes weist für die Meßachse X eine Anordnung gemäß Figur 1 auf, wobei jedoch die Lichtquelle L, über einen Lichtverteiler V (z.B. ebenfalls einen 3x3-Koppler) mit dem zentralen Eingang des 3x3-Kopplers $K_X$ verbunden ist. Nur in diesem Zweig befindet sich die Monitordiode $D_3$. Die Faserkreisel für die übrigen Meßachsen YZ sind in gleicher Weise über den Verteiler V mit der Lichtquelle L verbunden, weisen jedoch keine derartige Monitordiode auf.

Für die einzelnen Komponenten $\Phi_X$, $\Phi_Y$ und $\Phi_Z$ der Drehrate kann nun der unter Figur 1 beschriebene Algorithmus angewendet werden, wobei jeweils die Ausgangssignale der Dioden $D_{1x}$ und $D_{2x}$ bzw. $D_{1y}$ und $D_{2y}$ bzw. $D_{1z}$ und $D_{2z}$

jeweils in Kombination mit dem Ausgangssignal von $D_3$ verwendet wird.

**Patentansprüche**

1. Verfahren zur Bestimmung der Drehrate mittels eines Faserkreisels mit einem 3x3-Koppler, bei dem ein erster Kanal auf der einen Seite mit einer Lichtquelle und auf der anderen Seite mit einem ersten Fotoelement optisch verbunden ist und bei dem die beiden anderen Kanäle auf der einen Seite mit einer Faserspule und auf der anderen Seite mit je einem zweiten bzw. dritten Fotoelement optisch verbunden sind, wobei zumindest zwischen der Lichtquelle und dem 3x3-Koppler oder an einem Ende der Faserspule ein Depolarisator angeordnet ist und/oder die Faserspule eine polarisationserhaltende Faser aufweist, **dadurch gekennzeichnet,** daß mittels einer Signalverarbeitungselektronik aus den Signalen der drei Fotoelemente und aus durch Eichung ermittelten temperaturabhängigen Koeffizienten ein temperaturbezogener, von der Drehrate unabhängiger Wert für die Dämpfung der Faserspule und des 3x3-Kopplers errechnet wird und, daß die Drehrate aus den Signalen der drei Fotoelemente, den durch Eichung ermittelten temperaturabhängigen Koeffizienten und aus dem errechneten, temperaturbezogenen Wert für die Dämpfung errechnet wird.

2. Verfahren zur Bestimmung der Drehrate mittels eines Faserkreisels mit einem 3x3-Koppler, bei dem ein erster Kanal auf der einen Seite mit einer Lichtquelle optisch verbunden ist und bei dem die beiden anderen Kanäle auf der einen Seite mit einer Faserspule und auf der anderen Seite mit je einem Fotoelement optisch verbunden sind, wobei zumindest zwischen der Lichtquelle und dem 3x3-Koppler oder an einem Ende der Faserspule ein Depolarisator angeordnet ist und/oder die Faserspule eine polarisationserhaltende Faser aufweist, **dadurch gekennzeichnet,** daß mittels einer Signalverarbeitungselektronik aus den Signalen der beiden Fotoelemente und aus durch Eichung ermittelten temperaturabhängigen Koeffizienten ein temperaturbezogener, von der Drehrate unabhängiger Wert für das Produkt d. $P_3$ aus Dämpfung d und optischer Ausgangsleistung des ersten Kanals $P_3$ errechnet wird und, daß die Drehrate aus den Signalen der beiden Fotoelemente, den durch Eichung ermittelten temperaturabhängigen Koeffizienten und aus dem errechneten, temperaturbezogenen Wert Produkt d . $P_3$ errechnet wird.

3. Verfahren zur Bestimmung der Drehrate eines mehrachsigen Faserkreiselpaketes mit je einer Faserspule und je einem 3x3-Koppler pro Meßachse, wobei die 3x3-Koppler über einen Faserkoppler mit einer Lichtquelle verbunden sind, nach Patentanspruch 1, **dadurch gekennzeichnet,** daß lediglich ein 3x3-Koppler des Faserkreiselpaketes ein erstes Fotoelement aufweist und sowohl die Errechnung der temperaturbezogenen Dämpfung der einzelnen Faserspulen und 3x3-Koppler, als auch der Drehrate in jeder Meßachse mit dem gleichen Signal des ersten Fotoelementes erfolgt.

4. Verfahren zur Bestimmung der Drehrate eines mehrachsigen Faserkreiselpaketes mit je einer Faserspule und je einem 3x3-Koppler pro Meßachse, wobei die 3x3-Koppler über einen Faserkoppler mit einer Lichtquelle verbunden sind, nach Patentanspruch 2, **dadurch gekennzeichnet,** daß jeder 3x3-Koppler einer Faserkreiselachse nur mit zwei Fotoelementen verbunden ist und in jeder Achse das Produkt d . $P_3$ und daraus die Drehrate der jeweiligen Achse berechnet wird.

## Fig.1

## Fig.2